**Europäisches Patentamt**

(19) **European Patent Office**

**Office européen des brevets**

(11) Publication number: **0 144 240**
**B1**

(12) **EUROPEAN PATENT SPECIFICATION**

(45) Date of publication of patent specification: **04.04.90**

(51) Int. Cl.⁵: **B 01 L 3/02,** G 01 F 13/00

(21) Application number: **84308439.3**

(22) Date of filing: **05.12.84**

(54) Precision reagent metering and delivery device.

(30) Priority: **05.12.83 US 557913**

(43) Date of publication of application:
**12.06.85 Bulletin 85/24**

(45) Publication of the grant of the patent:
**04.04.90 Bulletin 90/14**

(84) Designated Contracting States:
**AT BE CH DE FR GB IT LI LU NL SE**

(56) References cited:
**FR-A-2 358 651**
**FR-A-2 519 755**
**GB-A-2 002 448**
**US-A-3 931 915**

(73) Proprietor: **DAVIS MEDITECH INC. (a California corporation)**
**714 Puma Court**
**Davis California 95616 (US)**

(72) Inventor: **DAVIS MEDITECH INC. (a California corporation)**
**714 Puma Court**
**Davis California 95616 (US)**

(74) Representative: **Warren, Anthony Robert et al**
**BARON & WARREN, 18 South End, Kensington**
**London W8 5BU (GB)**

Courier Press, Leamington Spa, England.

## Description

The present invention relates generally to liquid dispensing devices. More particularly the invention concerns a precision reagent metering and delivery device.

There exists in the prior art a wide variety of volumetric devices for dispensing liquids such as reagents. On one end of the spectrum is the simple manual type, such as the pipette, wherein a quantity of liquid is sucked up into a graduated tube and then discharged as a metered quantity. On the other end of the spectrum are various highly sophisticated mechanical and electromechanical devices apapted to reproducably dispense precise quantities of liquid from conventional or specially designed reagent containers. The manual type devices often lack the necessary precision, while the mechanized devices frequently are unduly complex, extremely costly and in many instances, tend to fail or malfunction in continuous use.

The apparatus disclosed in US—A—3,834,241 issued to Garren et al and in US—A—4,054,061 issued to Valt are exemplary of manual type pipette devices.

The apparatus disclosed in US—A—3,931,915 issued to Downings et al and in US—A—4,101,283 issued to Sundstrom are exemplary of mechanical and electromechanical dispensing devices. The latter mentioned Sundstrom device is specifically adpated for use in accurately pipetting specified digitally programmed volumes of sample and the delivery of likewise specified, digitally programmed, volumes of reagent. The thrust of the Sundstrom invention is directed toward the provision of a specially constructed plunger which is rotated within a non-threaded reagent container. Rotation of the plunger is controlled by a relatively sophisticated light-photo cell system which is operably interconnected with motor means through somewhat complex counting and connecting circuits. As a result of the particular configuration of the Sundstrom plunger, it cuts grooves in the inner wall of the reagent container as it rotates.

GB—A—200 2448 describes a pump for delivering small quantities of liquid and comprising a piston and a fluid-containing cylinder driven by a manually actuated screw engaging teeth on a sleeve which engages the cylinder through screws threads, and moves the cylinder in a straight line relative to the piston.

The device of the present invention is readily distinguishable from the prior art in that it enables the solution of the problems inherent in the precision delivery of large or small liquid aliquots, in that it is capable of providing a relatively simple, inexpensive and positive acting, but yet highly precise device for accurate reagent metering and delivery. As will be appreciated from the description which follows, because of its simplicity, the device embodying the present invention is easy to maintain and clean, is highly reliable in operation and can readily be operated by unskilled, non-professional personnel.

It is an object of the present invention to provide a relatively simple, highly reliable and easy to operate device which uniquely solves the problem of high precision and accuracy in reagent metering and delivery.

Additionally, it is an object of the invention to provide a device of the aforementioned character in which the component parts which make up the device are of relatively simple design and can be manufactured of relatively inexpensive, easily fabricated and readily available materials.

Additionally, it is an object of the invention to provide a device of the character described in the previous paragraphs which is relatively simple to clean and maintain.

Additionally, it is an object of the invention to provide a device of the class described which makes use of disposable reagent containers which can be readily installed by non-professional personnel with minimum system downtime.

According to the present invention there is provided a fluid metering and deliverly device comprising a threaded fluid container having a top wall and a generally cylindrical inner wall; piston means; means for providing relative axial movement between said pistion means and said container; and fluid delivery means for conducting fluid from the interior of said container to the exterior of the device, characterised in that said piston means comprises a rigid member mounted within a threaded hollow base and a plunger mounted within said container for axial movement therewithin, said plunger having sealing means adapted to sealably engage said inner wall of said container for preventing leakage of fluid between said plunger and said inner wall; in that said means for providing said relative axial movement comprises the threaded interconnection between said container and said base; and in that said rigid member is operably interconnectable with, or integral with, said plunger to effect relative axial movement between said plunger and said container upon relative rotation between said container and said base.

The positional terms such as "bottom" and "top" employed in the description and appended claims are related to the device when oriented as shown in the accompanying drawings. However, these terms are used merely to assist in understanding the invention and it is to be understood that the claims are to be construed as encompassing other orientations of the device.

In one embodiment, the device comprises an externally threaded, disposable reagent container which is threadably receivable within an internally threaded base. Sealably mounted within the reagent container is the plunger, which has a fluid passageway therethrough communicating at one end with the interior of the reagent container and at the other end with a fluid delivery tube. The plunger is operably coupled with the rigid member disposed in the base so that rotation of the reagent container relative to the base will cause precisely predeterminable longitudinal movement of the plunger within the reagent container thereby causing the reagent to be controllably forced out of the delivery tube with great precision.

In another embodiment, the fluid passageway in the plunger, and the associated delivery tube, are omitted, and the reagent is discharged from, and/or introduced into, the reagent container, via an opening or port in the reagent container.

In order that the invention may be more readily understood, reference will now be made to the accompanying drawings, in which:-

Figure 1 is an exploded, side-elevational, cross-sectional view of the reagent metering and delivery device embodying the invention;

Figure 2 is a view similar to Figure 1, but showing the component parts of the device in a threadably mated relationship;

Figure 3 is a cross-sectional view taken along lines 3—3 of Figure 2;

Figure 4 is a diagramatical plan view of the device showing diagramatically one type of driving mechanism;

Figure 5 is a cross-sectional view, similar to Figure 1, of a second embodiment of device; and

Figure 6 is a cross-sectional view, similar to Figure 5, of a third embodiment of device.

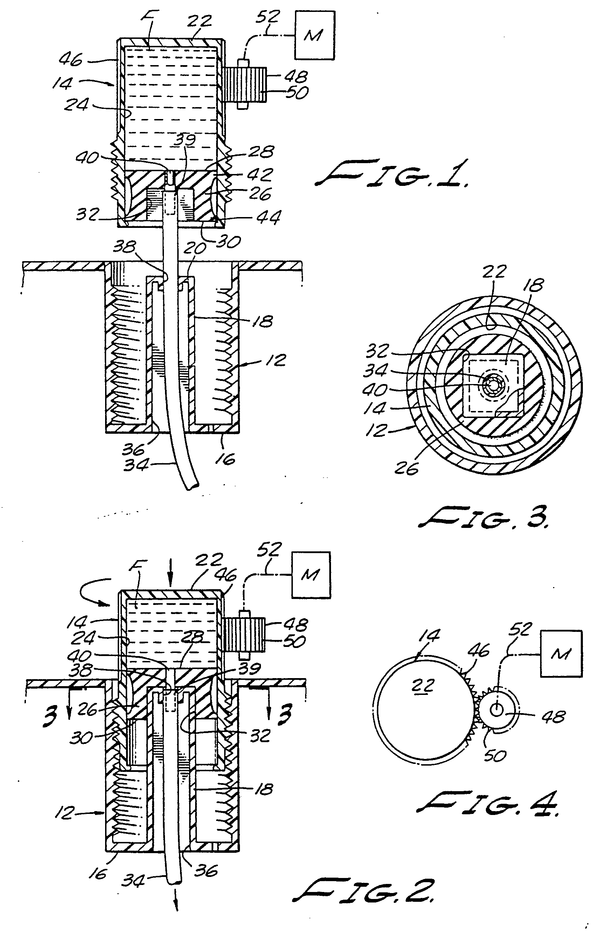

Referring to the drawings, and particularly to Figures 1 to 3, the reagent metering and delivery device comprises a generally cylcindrically shaped, internally threaded hollow base 12 and a generally cylindrically shaped, externally threaded reagent container 14 adapted to be threadably received within base 12. Base 12 includes a bottom closure wall 16 and a rigid member, shown here in the form of a hollow, upstanding stanchion or column 18 mounted on wall 16 and extending axially upwardly within the hollow base 12 and terminating at an upper end portion 20.

As indicated in Figure 2, reagent container 14 is adapted to be threadably interconnected with base 16 upon rotation of the container relative to the base. Rotation of container 14 may be accomplished manually, or, in a manner presently to be discussed, it may be accomplished by a mechanical drive means for controllably rotating the reagent cylinder relative to the base. The top of reagent container 14 is closed by a top closure wall 22 and the inner wall 24 of the container is generally cylindrical in shape.

Mounted for reciprocal movement within the reagent container 14 is a generally cylindrically shaped metering piston or plunger 26 having upper and lower walls 28 and 30 respectively. Formed within bottom wall 30 of the plunger is connecting means for operably interconnecting the plunger with the stator, or upstanding column, 18 provided in base 12. In the embodiment of the invention shown in the drawings, this connecting means is provided in the form of a cavity 32 which, as shown in Figure 3, is generally rectangular in cross-section and is adapted to closely receive the upper end portion 20 of upstanding column 18.

A fluid delivery means is provided for conducting fluid from the interior of reagent container 14 to the exterior of the device. This fluid delivery means is here provided in the form of a tubular conduit 34 which extends through an aperture 36 formed in bottom wall 16 of base 12. The conduit then extends upwardly through hollow column 18 and then outwardly through an aperture 38 formed in the upper portion 22 of the upstanding column 18 terminating in a first end 39. As best seen by referring to Figure 1, plunger 26 is provided with a fluid passageway 40 having one end communicating with the interior of the reagent container 14 and the other end communicating with conduit 34.

To prevent leakage of fluid between plunger 26 and the inner cylindrical wall 24 of reagent container 14, plunger 26 is provided with sealing means adapted to sealably engage the inner wall 24 of the reagent container as the plunger moves reciprocally within the reagent container. In the present form of the invention, this sealing means comprises a pair of spaced apart, circumferentially extending skirts 42 and 44, the outer edges of which press resiliently against inner wall 24 of the reagent container. While sealing skirts are shown in the drawings, it is to be understood that one or more conventional type elastomeric O-rings could additionally or alternatively be used as the sealing means.

As best seen by also referring to Figure 4, the drive means of this embodiment of the invention comprises a multiplicity of gear teeth or splines 46 provided about the periphery of the reagent container 14. A drive roller 48, also having a multiplicity of gear teeth or splines 50 provided about its periphery, is adapted to mateably engage and controllably drive the reagent container 14. A motor M is operably interconnected with drive roller 48 by a suitable driving connection shown schematically in the drawings and indicated by the numeral 52. Depending upon the end use to be made of the device embodying the invention, the drive means may take any number of forms well known to those skilled in the art. For example, it may comprise a portable driving mechanism including a housing within which drive roller 48 is rotatably carried. In this instance, the drive roller can, if desired, be interconnected with motor M by a flexible shaft. Alternatively the drive means may be fixed and include a housing fixedly mounted in close proximity to reagent container 14 with drive roller 48 carried therewithin and adapted to be driven by a suitable drive train interconnected with motor M. The design of drive means of the character described are well within the skill of the art and their precise construction need not be described herein.

In operation, when the parts are mated in the manner shown in Figure 2, rotation of reagent container 14 relative to the base 12 will cause the reagent container to travel downwardly in relation to plunger 26, which is fixed against rotation by the stator.

Since the sealing means, such as the skirts 42, and 44, provided on plunger 26 prevents the fluid F contained within container 14 from passing between the plunger and the inner wall 24 of the container, the fluid will be forced outwardly of the device through delivery tube 34. The amount of fluid passing through the delivery tube is precisely proportioned to the travel of container 14 along the internal threads of base 12 as container 14 is rotated by the drive means. Accordingly, by closely controlling the rotation of the container 14 the delivery of the fluid from the device can be precisely and accurately controlled. More specifically by providing very fine threads on the mating parts and through close control of the drive means, high precision and accuracy in the delivery of small or large liquid aliquots can consistently be achieved.

Delivery via the tube 34, or other delivery means, may be effected in a variety of ways, for example via a luer (not shown) connected to the lower or outer end of the conduit 34.

The device shown in Figure 5 is basically similar to that illustrated in the preceding Figures, and only the dissimilarities will be described.

In the device shown in Figure 5, the plunger 26 is cylindrical, and is provided with sealing means in the form of an elastomeric O-ring 60 mounted in an annular groove in the upper end of the plunger periphery. A spring retaining ring 61 is located in an internal annular groove in the lower end of the cylindrical wall 24 of the reagent container 14 below the plunger, to prevent unintentional separation of the plunger from the reagent container.

The rectangular-section cavity 32 in the underside of the plunger 26 opens out at its upper end to form an undercut region comprising an annular or part-annular channel 62. The upper end of the column 18, above its rectangular-section region is formed with an annular or part-annular lip or rib 63 which is preferably rounded in cross-section. The diameter(s) of the channel 62 and rib 63 may, for example, approximate the diagonal dimension(s) of the rectangular section cavity 32 in the plunger and the rectangular section region of the column 18. Due to the resilience of the rib 63, and/or the plunger 26, and/or the column 18, the plunger may be readily assembled to the column by forcing the ribbed end of the column into the cavity until the rib 63 snaps into the channel 62, thus locking the plunger and column together.

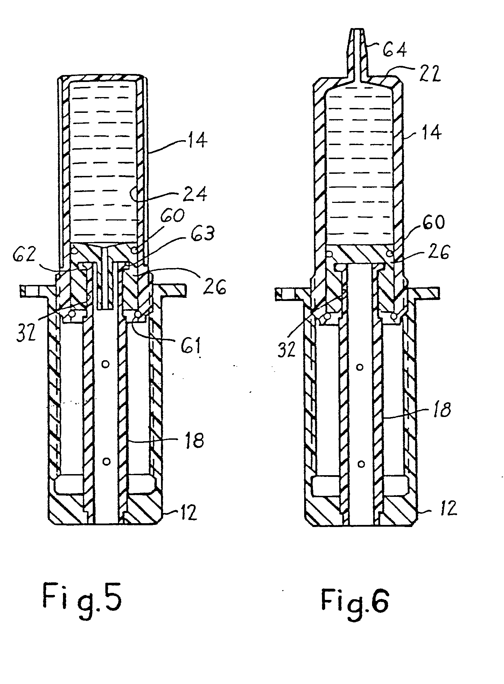

The device shown in Figure 6 differs from that shown in Figure 5, and also that shown in Figures 1 to 4, in that the passageway 40 in the plunger 26, and the conduit 34, are omitted, the reagent container 14 being provided with an outlet port, for example a conduit 64 associated with the top wall 22 and communicating with the interior of the container 14, through which the reagent is discharged in operation of the device.

The components of the devices hereinbefore described may be made from a variety of materials, for example primarily synthetic plastics materials. In one specific embodiment, the base 12, plunger 26 and column 18 may be formed from an acrylonitrile butadiene styrene (ABS) and the reagent container 14 may be formed from a polyacetal such as Delrin (an acetal homopolmer manufactured by Du Pont). In the devices illustrated in Figures 5 and 6, the retaining ring 61 may be formed from stainless steel wire or Valox, and the O-ring 60 may be a silicone rubber.

Because each device embodies a minimum number of moving parts and due to the fact that the drive means is external of the unit and easily accessible, the device is highly reliable, readily maintainable and simple to operate.

Whilst various embodiments of the invention have been described in detail, it will be understood that changes or modifications may be made in the individual parts and/or their relative assembly in order to meet specific requirements or conditions. Such changes and modifications may be made without departing from the scope of the invention.

For example, the plunger need not be locked against rotation relative to the stator. Whilst this is preferable in the embodiments of Figures 1 to 3 and 5, in which the reagent is dispensed via a conduit is connected to the plunger, to prevent rotation of the conduit, it is not necessary in the embodiment of Figure 6, in which the reagent is dispensed via a conduit integral with the reagent container.

The devices, and in particular the reagent container, may be filled via the same conduits, passageways, etc which are employed to dispense the reagent, for example by operating the devices in reverse, i.e. by unscrewing the reagent container relative to the base.

The devices may be employed to remove or extract, instead of or in addition to dispensing, a metered quantity or metered quantities of reagents or other liquids, by unscrewing the reagent container relative to the base.

The devices may be used to dispense and/or extract liquids other than reagents.

The container for reagents or other liquids need not be disposable, but may form a permanent part of the device. For example, as applied to the devices shown in Figures 5 and 6, the plunger 26 and stator 18 may be assembled together before insertion of the plunger into the container 14. After insertion of the plunger, the retaining ring 61, if employed, is installed, and therefore the base 12 is fitted to the container 14 and stator 18. Alternatively, the plunger may be inserted into the empty container 14, and the retaining ring 61 installed, whereafter the assembled base 12 and stator 18 are fitted to the container. By screwing the base 12 fully home, the plunger will firstly be driven against the top wall 22, and the upper end of the stator will then be driven into the cavity in the plunger, to assemble the plunger and stator together.

Whilst, in the embodiments (for example Figures 1 to 3) in which the container 14 is disposable, the stator merely has to be capable of urging the plunger unidirectionally towards the top wall 22, in the non-disposable embodiments (for example Figures 5 and 6), the stator is anchored to the plunger to permit bidirectional operation of the plunger. In the latter embodiments, the stator and plunger may be secured together in a variety of ways, bonded together, or formed integrally with each other.

## Claims

1. A fluid metering and delivery device comprising a threaded fluid container (14) having a top wall (22) and a generally cylindrical inner wall (24); piston means (18, 26); means for providing relative axial movement between said piston means (18, 26) and said container (14); and fluid delivery means (34, 40, 64) for conducting fluid from the interior of said container (14) to the exterior of the device, characterised in that said piston means (16, 26) comprises a rigid member (18) mounted within a threaded hollow base (12) and a plunger (26) mounted within said container (14) for axial movement therewithin, said plunger (26) having sealing means (42, 44, 60, 61) adapted to sealably engage said inner wall (24) of said container (14) for preventing leakage of fluid between said plunger (26) and said inner wall (24); in that said means for providing said relative axial movement comprises the threaded interconnection between said container (14) and said base (12); and in that said rigid member (18) is operably interconnectable with, or integral with, said plunger (26) to effect relative axial movement between said plunger (26) and said container (14) upon relative rotation between said container (14) and said base (12).

2. A device as claimed in claim 1, wherein connecting means (32) are provided for releasably interconnecting said plunger (26) with said member (18).

3. A device as claimed in claim 2, wherein the connecting means (32) interconnects the plunger (26) and the member (18) in a manner which prevents rotation of said plunger (26) relative to said base (12) upon rotation of said container (14) relative to said base, and wherein the plunger (26) includes a fluid passageway (40) having one end communicating with the interior of said container (14) and the other end communicating with said fluid delivery means (34).

4. A device as claimed in claim 3, wherein said fluid delivery means (34) comprises a tubular conduit (34) communicating with said fluid passageway (40) of said plunger (26) and extending through said member (18) to the exterior of said base (12).

5. A device as claimed in claim 1 or 2, wherein said fluid delivery means comprises a port in the container (14), for example a conduit (64) associated with the top wall (22) of the container, and communicating with the interior of said container.

6. A device as claimed in any one of claims 2 to 5, wherein said member (18) comprises a hollow, upstanding column (18) mounted centrally of said hollow base (12) and wherein said connecting means (32) comprises a cavity formed in said plunger (26) adapted to closely receive the upper end (20) of said column.

7. A device as claimed in claim 6, wherein both said upstanding column (18) and said cavity in said plunger (26) are non-circular in cross-section in at least the interfitting regions thereof.

8. A device as claimed in claim 7, wherein both said cavity and the upper end portion (20) of said column (18) are generally rectangular in cross-section.

9. A device as claimed in any preceding claim, wherein said sealing means (42, 44, 60, 61) comprises at least one resilient, circumferentially extending element (42, 44, 60, 61) formed on or carried by the periphery of said plunger (26), the outer edge of which presses resiliently against said inner wall (24) of said container (14).

10. A device as claimed in Claim 9, wherein said at least one resilient, circumferentially extending element comprises at least one resilient annular skirt (42, 44) formed on the periphery of said plunger (26).

11. A device as claimed in claim 9, wherein said at least one resilient circumferentially extending element comprises an elastomeric O-ring (60) mounted in an annular groove in the upper end of the plunger periphery and a spring retaining ring (61) mounted in an annular groove in the lower end of the plunger periphery.

12. A device as claimed in any preceding claim, including drive means (46, 48, 50, 52, M) for providing controlled relative rotation between said container (14) and said base (12).

13. A device as claimed in claim 12, wherein said drive means comprises a plurality of teeth or splines (46) formed on said container (14); a drive member (48, 50) adapted to drivably engage said teeth or splines; and motor means (M) for driving said drive member (48, 50).

## Patentansprüche

1. Vorrichtung zum Abmessen und Ausgeben von Füssigkeiten mit einem Flüssigkeitsbehälter (14), der mit einem Gewinde versehen ist und eine Oberseite (22) aufweist, sowie eine umlaufende, innere zylindrischen Wandung (24); weiterhin sind Stempel (18, 26) vorgesehen und Mittel, um eine relative axiale Bewegung zwischen den Stempeln (18, 26) und dem Behälter (14) zu erzielen, und außerdem sind Mittel (34, 40, 64) vorgesehen, um die Flüssigkeit aus dem Inneren des Behälters (14) nach außen zu leiten, dadurch gekennzeichnet, daß die Stempel (18, 26) einen starren Stößel (18) beinhalten, welcher innerhalb eines hohlen, mit einem Innengewinde versehenen, Gehäuse (12) angeordnet ist und weiterhin ein axialer, verschiebbarer Kolben (26) innerhalb des Behälters (14) vorgesehen ist, wobei der Kolben (26) Dichtlippen (42, 44, 60, 61) aufweist, die sich dichtend gegen die innere, zylindrische Wandung (24) des Behälters (14) anlegen, um hierdurch ein Austreten von Flüssigkeit zwischen dem Kolben (26) und der inneren, zylindrischen Wandung (24) zu verhindern, insbesondere, wenn aufgrund der ineinandergreifenden Gewinde zwischen dem Behälter (14) und dem Gehäuse (12) eine axiale Verschiebung stattfindet, wobei der starre Stößel (18) an den Kolben (26) ansetzt, oder der starre Stößel (18) ist einstückig mit dem Kolben (26) ausgebildet, wodurch zwischen dem Kolben (26) und dem Behälter (14) eine axiale Verschiebung erzielt wird, wenn der Behälter (14) relativ zum Gehäuse (12) eine Rotation ausführt.

2. Vorrichtung nach Anspruch 1, dadurch gekennzeichnet, daß Verbindungsmittel (32) vorgesehen sind, um in wieder-lösbarer Art ein Zusammenwirken zwischen dem Kolben (26) und dem Stößel (18) zu ermöglichen.

3. Vorrichtung nach Anspruch 2, dadurch gekennzeichnet, daß die Verbindungsmittel (32) zwischen dem Kolben (26) und dem Stößel (18) eingreifen, derart, daß eine Rotation des Kolbens (26) relativ zu Gehäuse (12) verhindert wird, wenn der Behälter (14) relativ zum Gehäuse verdreht wird, wobei innerhalb des Kolbens (26 für Flüssigkeit eine Austrittsöffnung (40) ausgebildet ist, deren eine Seite mit dem Inneren des Behälters (14) und deren andere Seite mit Einrichtungen (34) zum Ausgeben von Flüssigkeit in Verbindung steht.

4. Vorrichtung nach Ansrpuch 3, dadurch gekennzeichnet, daß die Einrichtung zum Ausgeben von Flüssigkeit einen röhrenförmigen Auslaß (34) beinhalten, der mit der Austrittsöffnung (40) des Kolbens (26) verbunden ist und sich durch den Stößel (18) hindurch erstreckt und an der Außenseite des Gehäuses (12) mündet.

5. Vorrichtung nach den Ansprüchen 1 oder 2, dadurch gekennzeichnet, daß die Einrichtungen zum Ausgeben von Flüssigkeit aus einer Öffnung im Behälter (14) bestehen, z.B. aus einem Auslaß (64) an der Oberseite (22) des Behälters, wobei der Auslaß mit dem Inneren des Behälters in Verbindung steht.

6. Vorrichtung nach einem der Ansprüche 2 bis 5, dadurch gekennzeichnet, daß der Stößel (18) eine hohle, aufrecht stehende Säule (8) darstellt, welche mittig innerhalb des Gehäuses (12) angeordnet ist, wobei die Verbindungsmittel (32) als Ausnehmung innerhalb des Kolbens (26) vorgesehen sind und hierbei das obere Ende (20) der Säule von der Ausnehmung eng umschlossen wird.

7. Vorrichtung nach Anspruch 6, dadurch gekennzeichnet, daß die aufrecht angeordnete Säule (18) und die Ausnehmung im Kolben (26) beide im Bereich ihrer Umschließung im Querschnitt nicht kriesrund ausgebildet sind.

8. Vorrichtung nach Anspruch 7, dadurch gekennzeichnet, daß die Ausnehmung und der obere Abschnitt (20) der Säule (18) beide im Querschnitt rechteckig ausgbildet sind.

9. Vorrichtung nach einem der vorhergehenden Ansprüche, dadurch gekennzeichnet, daß die Dichtungsmittel bzw. Dichtlippen (42, 44, 60, 61) aus elastisch am Umfang sich erstreckenden Elementen (42, 44, 60, 61) bestehen, welche an der Außenseite des Kolbens (26) dort angeformt oder angeordnet sind, wobei sich die Außenseiten der Elemente elastisch gegen die innere Wandung (24) des Behälters (14) anpressen.

10. Vorrichtung nach Anspruch 9, dadurch gekennzeichnet, daß ein elastisch sich am Umfang erstreckendes Element eine elastische, ringförmige Schulter (42, 44) ausbildet, welche an der Außenseite des Kolbens (26) angeformt ist.

11. Vorrichtung nach Anspruch 9, dadurch gekennzeichnet, daß ein elastisch sich am Umfang erstreckendes Element als O-Ring (60) aus Elastomer-Material ausgebildet und in eine ringförmige Nut am oberen Ende des Kolbens angeordnet ist, und weiterhin ein Federring (61) in einer ringförmigen Nut unterhalb des unteren Endes des Kobens angeordnet ist.

12. Vorrichtung nach den vorhergehenden Ansprüche, dadurch gekennzeichnet, daß Antriebsmittel (46, 48, 50, 52, M) vorgesehen sind, um regelbar eine Rotation zwischen dem Behälter (14) und dem Gehäuse (12) zu erzeugen.

13. Vorrichtung nach Anspruch 12, dadurch gekennzeichnet, daß die Antriebsmittel aus einer Vielzahl von Zahnungen oder Rillen bestehen, welche am Behälter (14) angeformt sind, wobei Treibmittel (48, 50) vorgesehen sind, welche zum Antrieb mit den Zahnungen oder Rillen in Eingriff stehen und wieterhin ein Motor (M) vorgesehen ist, um die Treibmittel (48, 50) anzutreiben.

**Revendications**

1. Dispositif de prélèvement et de dépôt d'un fluide comprenant un réservoir fileté de fluide (14) ayant une paroi supéieure (22) et une paroi intérieure généralement cylindrique (24); un moyen de piston (18, 26); des moyens pour rendre possible un mouvement axial entre ledit moyen de piston (18, 26) et ledit réservoir (14) et des moyens de dépôt de fluide (34, 40, 64) pour conduire le fluide depuis l'intérieur dudit réservoir (14) vers l'extérieur du dispositif, caractérisé en ce que ledit moyen de piston (18, 26) comprend un élément rigide (18) monté à l'intérieur d'une base creuse filetée (12) et un piston-plongeur (26) monté à l'intérieur dudit réservoir (14) de façon à pouvoir se déplacer axialement à l'intérieur de celui-ci, ledit piston-plongeur (26) ayant des moyens d'étanchéité (42, 44, 60, 61) adaptés pour un coulissement étanche le long de ladite paroi intérieure (24) dudit réservoir (14) afin d'empêcher les fuites de fluide entre ledit piston-plongeur (26) et ladite paroi intérieure (24); en ce que ledit moyen pour rendre possible un mouvement axial relatif comprend une liaison par filetage entre ledit réservoir (14) et ladite base (12); et en ce que ledit élément rigide (18) peut être fonctionnellement relié avec, ou faire partie intégrante de-, ledit piston-plongeur (26) pour effectuer un mouvement axial relatif entre ledit piston-plongeur (26) et ledit réservoir (14) lors d'une rotation relative entre ledit réservoir (14) et ladite base (12).

2. Dispositif selon la revendication 1, caractérisé en ce que un moyen de liaison (32) est prévu pour relier de façon libérable ledit piston-plongeur (26) avec ledit élément (18).

3. Dispositif selon la revendication 2, caractérisé en ce que les moyens de connexion (32) mettent en relation le piston-plongeur (26) et l'élément rigide (18) d'une façon qui empêche la rotation dudit piston-plongeur (26) par rapport à ladite base (12) pendant la rotation dudit réservoir (14) par rapport à ladite base, et en ce que le piston-plongeur (26) comprend un passage de fluide (40) ayant une extrémité communiquant avec l'intérieur dudit réservoir (14) et l'autre extrémité communiquant avec ledit moyen de dépôt de fluide (34).

4. Dispositif selon la revendication 3, caractérisé en ce que ledit moyend de dépôt de fluide (34) comprend un conduit tubulaire (34) communiquant avec ledit passage de fluide (40) dudit piston-plongeur (26) et s'étendant à travers ledit élément rigide (18) vers l'extérieur de ladite base (12).

5. Dispositif selon la revendication 1 ou la revendication 2, caractérisé en ce que ledit moyen de dépôt de fluide comprend une ouverture dans le réservoir (14), par exemple un conduit (64) associé avec la paroi supérieure (22) du réservoir, et communiquant avec l'intérieur dudit réservoir.

6. Dispositif selon l'une quelconque des revendications 2 à 5, caractérisé en ce que ledit élément rigide (18) comprend une colonne creuse s'étendant vers le haut (18), montée de façon centrale par rapport à la base creuse (12) et caractérisé en ce que ledit moyen de liaison (32) comprend une cavité pratiquée dans ledit piston-plongeur (26) adaptée pour recevoir de façon ajustée l'extrémité supérieure (20) de ladite colonne.

7. Dispositif selon la revendication 6, caractérisé en ce que à la fois ladite colonne s'étendant vers le haut (18) et ladite cavité dans ledit piston-plongeur (26) ne sont pas circulaires en section transversale au moins dans les régions d'intera-daptation de celles-ci.

8. Dispositif selon la revendication 7, caractérisé en ce que à la fois ladite cavité et la portion d'extrémité supérieure (20) de ladite colonne (18) sont généralement rectangulaires en section transversale.

9. Dispositif selon l'une quelconque des revendictions précédentes, caractérisé en ce que lesdits moyens d'étanchéité (42, 44, 60, 61) comprennent au moins un élément resilient s'étendant circonférentiellement (42, 44, 60, 61) pratiqué sur-ou porté par-la périphérie dudit piston-plongeur (26), dont le bord extérieure appuie de façon résiliente contre ladite paroi intérieure (24) dudit réservoir (14).

10. Dispositif selon la revendication 9, caractérisé en ce que ledit au moins un élément résilient s'étendant circonférentiellement comprend au moins une jupe annulaire résiliente (42, 44) prévue sur la périphérie dudit piston-plongeur (26).

11. Dispositif selon la revendication 9, caractérisé en ce que ledit au moins un élément résilient s'étendant circonférentiellement comprend une bague en O à base d'élastomère (60) montée dans une rainure annulaire dans l'extrémité supérieure de la périphérie du piston-plongeur et une bague de retenue à ressort (61) montée dans une rainure annulaire dans l'extrémité inférieure de la périphérie du piston-plongeur.

12. Dispositif selon l'une quelconque des revendications précédentes, comprenant un moyen d'entraînement (46, 48, 50, 52, M) pour permettre une rotation relative contrôlée entre ledit réservoir (14) et ladite base (12).

13. Dispositif selon la revendication 12, caractérisé en ce que ledits moyen d'entraînement comprend une pluralité de dents ou de cannelures (46) pratiquées sur ledit réservoir (14); un élément d'entraînement (48, 50) adapté pour guider lesdites dents ou cannelures; et un moyen de moteur (M) pour entraîner ledit élément d'entraînement (48, 50).

FIG.1.

FIG.3.

FIG.4.

FIG.2.

Fig.5

Fig.6

2